# EUROPÄISCHE PATENTSCHRIFT

(11) **EP 0 665 707 B1**
(45) Veröffentlichungstag und Bekanntmachung des Hinweises auf die Patenterteilung: **17.07.1996**
(21) Anmeldenummer: 94118647.0
(22) Anmeldetag: 26.11.1994
(51) Int. Cl.: H05K 7/14, F16B 39/24

(54) **Schraubverbindung zum Befestigen der Frontplatten von elektronischen Geräteeinschüben**
Screw fastening for electronic drawer front plate
Fixation par vis de la façade de tiroirs électroniques

(30) Priorität: 26.01.1994 DE 4402132
(43) Veröffentlichungstag der Anmeldung: 02.08.1995
(73) Patentinhaber: Rohde & Schwarz GmbH & Co. KG, D-81671 München (DE)
(72) Erfinder: March, Franz, Dipl.-Ing. (FH), D-85598 Baldham (DE)
(74) Vertreter: Graf, Walter, Dipl.-Ing.

(56) Entgegenhaltungen:
- DE-U- 8 533 398
- FR-A- 2 599 927
- US-A- 2 424 208
- US-A- 3 156 281

## Beschreibung

Die Erfindung betrifft eine Schraubverbindung zum Befestigen der Frontplatten von elektronischen Geräteeinschüben an den seitlichen Profilschienen eines Schrankgestelles laut Oberbegriff des Hauptanspruches.

Eine Schraubverbindung dieser Art ist bekannt. Die Befestigungsschrauben sind in den Löchern der Frontplatte durch eine von hinten aufgesetzte Sicherungsscheibe unverlierbar gehalten, so daß sie vom Benutzer leicht in die Muttern oder Gewindeleisten, die in der T-Nut der seitlichen Profilschienen des Schrankgestelles eingesetzt sind, eingeschraubt werden können. Es ist auch bekannt, an der Sicherungsscheibe einen axial abstehenden hülstenartigen Kragen auszubilden, der mit Längsschlitzen versehen ist und damit über den Gewindeabschnitt der Befestigungsschraube auf den im Durchmesser verringerten Schraubenhals aufgedrückt werden kann. Durch den hülsenartigen Kragen, der im aufgesetzten Zustand mit geringem Spiel auf dem Schraubenhals sitzt, wird die Sicherungsscheibe zusätzlich geführt und kann nicht kippen.

Schraubverbindungen dieser Art müssen neben der Befestigungsfunktion auch noch einen guten elektrischen Massekontakt zwischen der Metallfrontplatte des Geräteeinschubes und dem Metall-Schrankgestell herstellen. Dies wird bei der bekannten Schraubverbindung der eingangs erwähnten Art bisher dadurch erreicht, daß die Randflächen der T-Nut der profilschienen, auf welche im fertig montierten Zustand die Rückseite der Frontplatte flach aufliegt, blankgehalten werden. Dies ist bei den meist aus Aluminium bestehenden und aus optischen Gründen eloxierten Profilschienen nur dadurch möglich, daß die Randflächen der T-Nut nachträglich durch einen zusätzlichen Bearbeitungsvorgang wieder blankgeschliffen werden. Da auch die Frontplatten meist entweder eloxiert oder lackiert sind müssen auch die die Befestigungsschrauben aufnehmenden Löcher der Frontplatte im Bereich unterhalb des Schraubenkopfes nachträglich wieder blankgefräst werden. Dadurch sind die bekannten Schraubverbindungen in der Herstellung relativ aufwendig und teuer.

Es ist Aufgabe der Erfindung, eine Schraubverbindung der eingangs erwähnten Art zu schaffen, die auch bei Profilschienen mit eloxierter Oberfläche eine gute galvanische Verbindung zwischen Frontplatte und Profilschienen gewährleistet.

Diese Aufgabe wird ausgehend von einer Schraubverbindung laut Oberbegriff des Hauptanspruches durch dessen kennzeichnende Merkmale gelöst. Vorteilhafte Weiterbildungen ergeben sich aus den Unteransprünchen.

Bei der erfindungsgemäßen Schraubverbindung wird die zum unverlierbaren Halten der Befestigungsschrauben an der Frontplatte vorgesehene Sicherungsscheibe nach Art einer üblichen Zahnscheibe ausgebildet, deren scharfe Zähne sich beim Einschrauben der Befestigungsschraube in die Mutter oder Gewindeleiste der T-Nut sowohl in die Oberfläche der Frontplattenrückseite als auch in die eloxierten Randflächen der T-Nut eingraben und so einen guten Massekontakt zwischen Frontplatte und Schrankgestelle herstellen. Damit wird eine zusätzliche Bearbeitung der eloxierten Randflächen der T-Nut der Profilschienen bzw. der Löcher der Frontplatten überflüssig, die Sicherungs-Zahnscheibe übernimmt eine Doppelfunktion und kann außerdem sehr einfach und billig als Blechpreßteil hergestellt werden. Die Zähne der Zahnscheibe müssen nicht unbedingt auf beiden Seiten vorgesehen sein, es genügt, wenn sie auf der der Frontplatte zugewandten Seite vorgesehen sind und so einen guten galvanischen Kontakt mit der Frontplatte gewährleisten, auf der der Profilschiene zugewandten Seite könnte die Zahnscheibe gegebenenfalls auch glatt sein, vor allem dann, wenn die Profilschiene selbst nicht eloxiert ist.

Die Erfindung wird im folgenden anhand schematischer Zeichnungen an einem Ausführungsbeispiel näher erläutert.

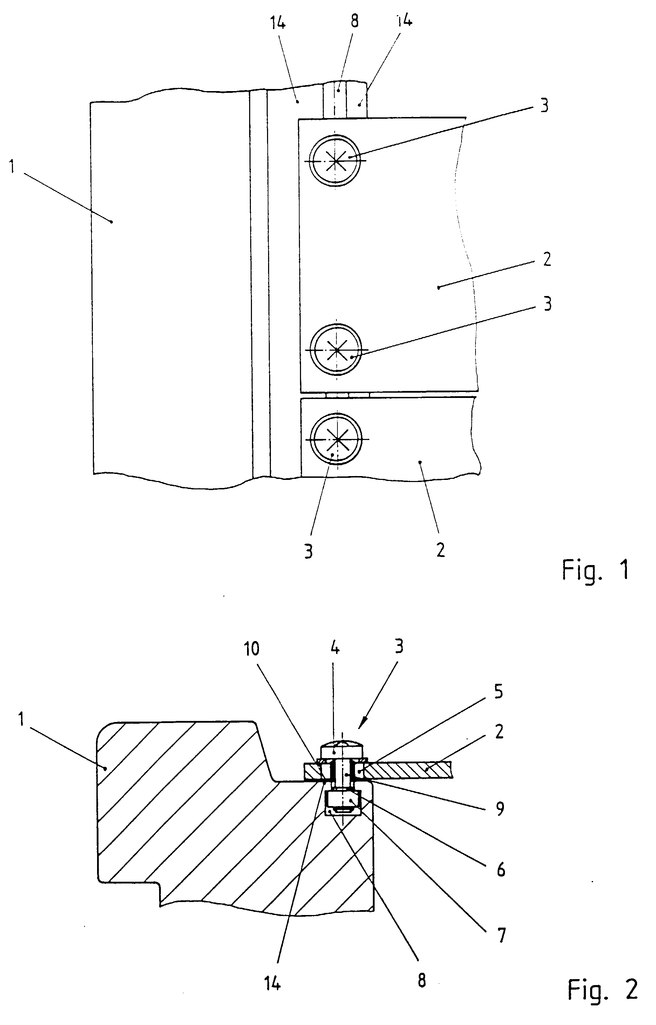

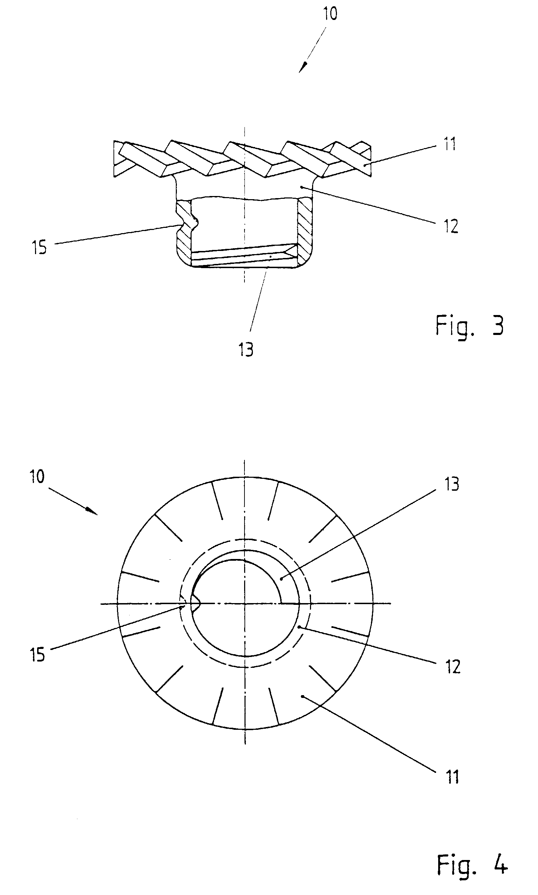

Fig. 1 zeigt die Draufsicht auf einen Teil eines Schrankgestelles mit daran befestigten Frontplatten von elektronischen Geräteeinschüben, Fig. 2 zeigt den zugehörigen Querschnitt, Fig. 3 zeigt im vergrößerten Maßstab eine hierbei benutzte Sicherungs-Zahnscheibe in Seitenansicht und teilweise im Schnitt, Fig. 4 zeigt die Draufsicht davon.

Fig. 1 zeigt den Ausschnitt eines üblichen Schrankgestelles mit einer seitlichen Profilschiene 1, an welcher in einem vorbestimmten Raster Frontplatten 2 von elektronischen Geräteeinschüben, beispielsweise eines Hochfrequenzsenders, über Schraubverbindungen 3 befestigt sind. In dem dargestellten Ausschnitt ist nur die linke Profilschiene des Schrankgestelles dargestellt, auf der rechten Seite ist eine gleichartige vertikale Profilschiene des Schrankgestelltes vorgesehen. Nach dem Schnittbild gemäß Fig. 2 besteht jede Schraubverbindung 3 aus einer Befestigungsschraube 4, beispielsweise mit Kreuzschlitz, die in einem Langloch 5 der Frontplatte 2 des Geräteeinschubes eingesetzt ist und deren Gewindeabschnitt 6 in einer Mutter 7 eingeschraubt ist, die in einer T-Nut 8 der Profilschiene 1 eingesetzt ist. Auf dem im Durchmesser gegenüber dem Gewindeabschnitt 6 verjüngten Schraubenhals 9 der Schraube 4 ist ein in den Fig. 3 und 4 im vergrößerten Maßstab dargestellte Sicherungs-Zahnscheibe 10 aufgesetzt, die in einem Stück als Blechteil beispielsweise aus rostfreiem gehärteten Stahl durch Stanzen, Ziehen und Prägen hergestellt ist. Die Zähne 11 der Zahnscheibe 10 sind in bekannter Weise verschränkt. Aus der Scheibenebene steht in einer Richtung eine kurze Führungshülse 12 ab, deren Länge kleiner als die axiale Länge des gewindefreien Schraubenhalses 9 und deren Innendurchmesser entsprechend dem Außendurchmesser des Gewindeabschnittes 6 der Schraube gewählt ist. Im Bereich der von der Zahnscheibe 10 abgewandten Mündung dieser Führungshülse ist ein halber Gewindegang 13 durch Prägen ausgeformt, Steigung und Gewindeform dieses halben Gewindeganges entsprechen dem Gewinde 6 der Schraube 4. Damit kann die Sicherungs-Zahnscheibe 10 von hinten auf die in das Langloch 5 eingesteckte Schraube 4 aufgeschraubt werden, bis sie die in Fig. 2 dargestellte Stellung auf dem im Durchmesser zurückgesetzten Schraubenhals erreicht, auf den sie dann mit Spiel jedoch im wesentlichen nicht kippbar durch den zwischen Langloch und Schraubenhals liegenden Hülsenabschnitt 12 unverlierbar gehalten ist. Zur Verbesserung dieses unverlierbaren Haltens der Sicherungs-Zahnscheibe 10 auf dem Schraubenhals 9 kann es noch vorteilhaft sein, auf der Innenseite der Führungshülse 12 möglichst gegenüber dem Gewindegang 13 einen noppenartigen Vorsprung 15 vorzusehen und zwar an einer Stelle, die der Gewindeteilung des Gewindeabschnittes 6 entspricht und die in einem Abstand oberhalb des Gewindeabschnittes 13 etwa in der Mitte zwischen Gewindeabschnitt 13 und der Zahnscheibe liegt. Der aus der Führungshülsenwand ausgeprägte Vorsprung 15 ragt radial etwa entsprechend der Tiefe des Gewindes nach innen, er behindert also nicht das Aufschrauben der Sicherungs-Zahnscheibe 10 auf das Gewinde 6, verhindert jedoch im voll auf den Schraubenhals aufgeschraubten Zustand das wieder Zurückschrauben und damit ein Herausfallen der Schraube.

Beim Einschrauben der Schraube 4 in die Mutter 7 graben sich die scharfen Zähne 11 der Zahnscheibe 10 einerseits in die Oberfläche der Frontplatten-Rückseite und andererseits in die Randflächen 14 der Profilschiene 1, welche die T-Nut 8 begrenzen. Die scharfen Zähne der Scheibe durchdringen dabei auch eine eventuell dort vorgesehene Eloxierschicht der Profilschiene 1, so daß ein guter galvanischer Kontakt zwischen Frontplatte 2 und Profilschiene 1 an jeder der Schraubverbindungen 3 hergestellt wird.

## Patentansprüche

1. Schraubverbindung zum Befestigen der Frontplatten (2) von elektronischen Geräteeinschüben an den seitlichen Profilschienen (1) eines Gestelles, bei der die Befestigungsschrauben (4) in Löchern (5) der Frontplatte (2) durch eine auf den Schraubenhals (9) aufgesetzte Sicherungsscheibe unverlierbar gehalten und in Muttern (7) oder Gewindeleisten, die in einer T-Nut (8) der Profilschiene (1) eingesetzt sind, einschraubbar sind, dadurch **gekennzeichnet,** daß die im eingeschraubten Zustand zwischen den ebenen Randflächen (14) der T-Nut und der dort flach aufliegenden Rückseite der Frontplatte (2) angeordnete Sicherungsscheibe als Zahnscheibe (10) ausgebildet ist.

2. Schraubverbindung nach Anspruch 1, dadurch **gekennzeichnet,** daß die Sicherungs-Zahnscheibe (10) über eine aus der Scheibenebene abstehende Führungshülse (12) auf dem Schraubenhals (9) unverlierbar gehalten ist und im Inneren dieser Führungshülse (12) ein dem Schraubengewinde (6) entsprechender Gewindeabschnitt (13), insbesondere nur ein halber Gewindegang, ausgebildet ist.

3. Schraubverbindung nach Anspruch 1 oder 2, dadurch **gekennzeichnet,** daß auf der Innenseite der Führungshülse (12) ein radial nach innen ragender noppenartiger Vorsprung (15) ausgebildet ist.

4. Schraubverbindung nach einem der vorhergehenden Ansprüche, dadurch **gekennzeichnet,** daß die Zähne (11) der Zahnscheibe (10) nur auf der der Frontplatte (2) zugewandten Seite ausgebildet sind und die Zahnscheibe auf der anderen Seite glatt ist.

5. Schraubverbindung nach einem der vorhergehenden Ansprüche, dadurch **gekennzeichnet,** daß die Sicherungs-Zahnscheibe (10) mit davon abstehender Führungshülse (12) und Innengewinde (13) sowie Vorsprung (15) aus einem Blechstück durch Ziehen, Prägen und Stanzen einstückig geformt ist.

## Claims

1. Screwed connection for securing front panels (2) of electronic slide-in units to the lateral mounting channels (1) of a rack, wherein the fixing screws (4) are held captive in holes (5) in the front panel (2) by a retainer washer placed onto the neck (9) of the screw and are adapted to be tightened in nuts (7) or threaded shoulders set in a T-shaped slot (8) in the mounting channel (1), characterised in that the retainer washer which is positioned, once the screw has been tightened, between the plane peripheral surfaces (14) of the T-shaped slot and the rear of the front panel (2) which rests flat thereon, is in the form of a toothed disc (10).

2. Screwed connection according to claim 1, characterised in that the retaining toothed disc (10) is held captive on the screw neck (9) by means of a guide sleeve (12) which protrudes from the plane of the disc, and formed inside the said guide sleeve (12) is a threaded portion (13) matching the screw thread (6), more particularly only half a turn.

3. Screwed connection according to claim 1 or 2, characterised in that formed on the inside face of the guide sleeve (12) is a radially inwardly projecting knob-like projection (15).

4. Screwed connection according to any of the preceding claims, characterised in that the teeth (11) of the toothed disc (10) are only formed on the side nearest the front panel (2) and on the other side the toothed disc is smooth.

5. Screwed connection according to any of the preceding claims, characterised in that the retaining toothed disc (10) with the protruding guide sleeve (12) and internal thread (13) and projection (15) has been fabricated from one piece of metal sheet by drawing, stamping and punching.

## Revendications

1. Liaison par vis servant à fixer les façades (2) de tiroirs d'appareils électroniques sur les rails profilés (1) latéraux d'un bâti, liaison dans le cas de laquelle les vis de fixation (4) sont maintenues de façon imperdable dans les trous (5) de la façade (2) par une rondelle de sécurité, montée sur le col de la vis (9) et peuvent être vissées dans des écrous (7) ou des listels, qui sont insérés dans une rainure en forme de T (8) du rail profilé (1), liaison par vis caractérisée en ce que le disque de sécurité, qui est disposé en position vissée entre les surfaces planes (14) des bords de la rainure en forme de T et la face arrière reposant à plat dessus, de la façade (2) est constituée sous la forme d'une rondelle dentée (10).

2. Liaison par vis selon la revendication 1, caractérisée en ce que la rondelle de sécurité dentée (10) est maintenue de façon imperdable au moyen d'une douille de guidage (12), qui se dresse à partir du plan de la rondelle sur le col de la vis (9) et en ce qu'on constitue à l'intérieur de cette douille de guidage (12) une section filetée, qui correspond a un filetage de la vis (6), en particulier une demi-spire seulement.

3. Liaison par vis selon la revendication 1 ou 2, caractérisée en ce que sur la face intérieure de la douille de guidage (12), on constitue une saillie (15), qui pénètre radialement vers l'intérieur, en forme de nope.

4. Liaison par vis selon l'une des revendications précédentes, caractérisée en ce que les dents (11) de la rondelle dentée (10) sont seulement constituées sur le côté qui est tourné vers la façade (2) et en ce que la rondelle dentée est lisse sur l'autre côté.

5. Liaison par vis selon l'une des revendications précédentes, caractérisée en ce que la rondelle de sécurité dentée (10) est formée d'une seule pièce avec la douille de guidage (12) et le filage intérieur (13), qui se dressent à partir de la rondelle, ainsi que la saillie (15) en une pièce de tôle par étirage, matriçage et estampage.
